# EUROPÄISCHE PATENTANMELDUNG

(11) **EP 2 003 863 A1**
(43) Veröffentlichungstag der Anmeldung: **17.12.2008**
(21) Anmeldenummer: 07019896.5
(22) Anmeldetag: 11.10.2007
(51) Int. Cl.: H04M 1/03, H04M 1/60, H04M 1/02

(54) **Handapparat für eine Breitbandtelekommunikationsanlage**

(30) Priorität: 12.06.2007 DE 102007027625
(71) Anmelder: Avaya GmbH & Co. KG, 60326 Frankfurt am Main (DE)
(72) Erfinder: Dorn, Dieter, 61118 Bad Vilbel (DE); Brunsfeld, Kurt, 65760 Eschborn/Ts. (DE); Eckard, Hans-Ulrich, 64285 Darmstadt (DE)
(74) Vertreter: Tergau & Pohl Patentanwälte

(57) **Zusammenfassung**

Ein Handapparat (1) für eine Breitbandtelekommunikationsanlage, dessen Gehäuse unter Bildung einer Fügekante (6) aus einer Ober- (2) und einer Unterschale (4) zusammengesetzt ist, soll eine zuverlässige Ankopplung des Resonanzvolumens an das Freifeld bei besonders gering gehaltener Schallleckage gewährleistet. Dazu ist erfindungsgemäß die Fügekante (6) mit einer Anzahl von Koppelschlitzen (8) versehen

## Beschreibung

Die Erfindung bezieht sich auf einen Handapparat für eine Breitbandtelekommunikationsanlage, dessen Gehäuse unter Bildung einer Fügekante aus einer Ober- und einer Unterschale zusammengesetzt ist

Telefonendgeräte, die an eine Breitbandtelekömmunikationsanlage angeschlossen sind, verfügen üblicherweise über direkt oder kabellos verbundene Handapparate, die Sprachnachrichten an einen Benutzer senden und von diesem empfangen werden können. Hierzu verfügen solche Handapparate in der Regel über eingebaute Mikrofone zur Aufnahme der Sprachnachricht und über Lautsprecher zur Übermittlung einer solchen Sprachnachricht an den Benutzer, die in einem gemeinsamen Gehäuse des Handapparats angeordnet sind. Aus produktions-technischen Gründen ist dieses Gehäuse üblicherweise unter Bildung einer so genannten Fügekante aus einer Ober- und Unterschale, also im wesentlichen aus zwei Gehäusehälften, zusammengesetzt.

Um bei der Übermittlung einer Sprachnachricht an den Benutzer ein besonders gutes Klangspektrum zu erhalten, ist im Inneren des Handapparates im Bereich des Lautsprechers üblicherweise ein Resonanzvolumen vorgesehen. In Abhängigkeit des zur Verfügung stehenden Volumens und insbesondere von dessen räumlicher Ausdehnung wird nämlich das akustische Signal der Sprachmitteilung in den entsprechenden Frequenzen durch Resonanz verstärkt und kann somit für den Benutzer deutlicher wahr genommen werden. Das in Handapparaten aufgrund der Bauart nur begrenzt zur Verfügung stehende Resonanzvolumen beschränkt daher auch den Frequenzbereich, der durch die Resonanz verstärkt wird, und somit auch die akustisch wahrnehmbare Übertragungsqualität des Systems. Die untere Grenze der auf diese Weise noch gut übertragbaren Signalfrequenzen liegt daher bei der üblichen Dimension von Handapparaten bei etwa 400 Hz.

Um jedoch für eine bessere Hör- und Übertragungsqualität für das menschliche Gehör insgesamt wahrnehmbare Frequenzspektrum, das sich auf der Tieffrequenzseite bis hin zu Frequenzen von ca. 1 Hz erstreckt, übertragungsseitig besonders gut abzudecken, sind Handapparate üblicher Bauweise mit einer Anzahl von Koppelschlitzen versehen. Diese Koppelschlitze verbinden das Resonanzvolumen im Inneren des Handapparates mit dem Freifeld außerhalb des Handapparates. Diese Ankopplung des Resonanzvolumens an den äußeren Luftraum ermöglicht es, dieses auf einfachste Weise zu vergrößern. Hierdurch wird erreicht, dass auch der Frequenzbereich unter 400 Hz verstärkt wiedergegeben oder übertragen werden kann und somit ein besonders guter Klang der Sprachmitteilung durch den Lautsprecher erzeugt werden kann. Für eine zuverlässige Freifeldankopplung sind die Koppelschlitze üblicherweise an der Rückseite des Handapparates angeordnet. Je nach Verwendungszweck können Handapparate rückseitig alternativ auch sogar komplett offen gelegt werden, um eine maximale Ankopplung des Freifeldes zu ermöglichen. Je nach Ausarbeitung der Koppelschlitze und der durch sie erzielten Ankopplung ist dabei eine Verstärkung des Frequenzbereiches bis hinab zu 100 Hz oder auch bis hinab zu 20 Hz erreichbar.

Das Anbringen von Öffnungen an der Rückseite des Handapparates schränkt jedoch nicht nur die an sich erwünschte designerische Freiheit bei der optischen Gestaltung der Handapparate, sondern auch den Komfort und die Abhörsicherheit beim Betrieb solcher Handapparate für die Breitbandtelekommunikationsanlagen ein. Gerade im Hinblick auf die Abhörsicherheit können die Öffnungen an der Rückseite des Handapparates und die damit eintretende unerwünschte ungerichtete Abstrahlung des Schalls also die Schallleckage ins Freifeld erhebliche Einschränkungen bedingen. Dies führt beispielsweise bei Anlagen in Call-Centern zu einer erhöhten Lärmbelästigung und zu unerwünschtem Mithören dritter Personen bei vertraulichen Gesprächen.

Der Erfindung liegt daher die Aufgabe zugrunde, einen Handapparat für die Breitbandtelekommunikation der oben genannten Art anzugeben, bei dem eine zuverlässige Ankopplung des Resonanzvolumens an das Freifeld bei besonders gering gehaltener Schallleckage gewährleistet ist.

Diese Aufgabe wird erfindungsgemäß gelöst, indem die Fügekante mit einer Anzahl von Koppelschlitzen versehen ist.

Die Erfindung geht dabei von der Überlegung aus, dass für die Nutzung eines Handapparates für die Breitbandtelekommunikation, also mit besonders breitem Frequenzspektrum bei der Übertragung, bei diesem das Außenfeld in jedem Fall akustisch an das Resonanzvolumen im Inneren des Handapparates angekoppelt sein sollte. Hierzu sollten bei der Auslegung des Handapparats geeignete Öffnungen, durch die eine schallleitende Verbindung des Resonanzvolumens mit dem Außenfeld hergestellt wird in jedem Fall beibehalten werden. Zur Begrenzung von Schallleckage über die Rückseite des Handapparates sollten diese Öffnungen aber an Positionen des Handapparates angebracht werden, die keine Schallleckage über die Rückseite des Handapparates fördern. Da diese Anforderung von der Fügekante des Handapparates, die beim Zusammenstecken einer Ober- und Unter-schale gebildet wird, zwanglos ohnehin erfüllt wird, werden die Koppelschlitze, die das Außenfeld akustisch mit einem Hohlraum im Inneren des Handapparates ankoppeln, in diese Fügekante hinein verlagert.

In bevorzugter Ausführung sind diese Koppelschlitze in der Nähe des Lautsprechers, also an der Oberseite des Handapparates, angeordnet, da sie dann mit dem Resonanzvolumen im Inneren des Handapparates in direkter Verbindung stehen. Zusätzlich wird dadurch die Gefahr besonders gering gehalten, dass die Koppelschlitze in der Fügekante durch beispielsweise die Hände des Benutzers abgedeckt werden und somit die akustische Ankoppelung des Außenfeldes an das Resonanzvolumen im Inneren des Handapparates beeinträchtigt ist.

Die Durchtrittsfläche der Koppelschlitze ist vorzugsweise so gewählt, dass die Anforderungen an das zu verstärkende Frequenzspektrum durch die Ankopplung an das Freifeld erfüllt werden. Die Breite der Koppelschlitze erstreckt sich dabei vorzugsweise über die gesamte Breite der Fügekante, so dass diese voll-umfänglich für die Koppelschlitze genutzt ist. Die Länge der Koppelschlitze ist dabei vorzugsweise an die benötigte Durchtrittsfläche angepasst.

Um in einfachster Weise den Produktionsaufwand bei der Herstellung der für den Handapparat verwendeten Ober- und Unterschale besonders zu verringern und die Flexibilität zu erhöhen, sind die Koppelschlitze in weiterer vorteilhafter Ausgestaltung symmetrisch bezüglich einer Symmetrieachse des Handapparates angeordnet. Hierdurch wird erreicht, dass die Art der Benutzung, also beispielsweise ob der Handapparat von einer linken Hand oder von einer rechten Hand gehalten wird, die Funktionalität der Koppelschlitze nur gering beeinflusst.

Die mit der Erfindung erzielten Vorteile bestehen insbesondere darin, dass durch die Anordnung der Koppelschlitze in die Fügekante des Gehäuses der Leckageschall besonders gering gehalten wird, wobei gleichzeitig die Ankopplung des akustischen Freifeldes an das Resonanzvolumen im Inneren des Handapparates weiterhin sichergestellt wird. Gerade die unerwünschte Aussendung von Schallwellen durch Öffnungen an der Rückseite der Handapparate und der dadurch bedingte Mangel in der Abhörsicherheit ist somit auf besonders einfache Weise vermindert. Weiterhin ist durch die Verwendung von Öffnungen als Koppelschlitze in der Fügekante die für die Hersteller derartiger Handapparate möglicherweise wichtige designerische Freiheit nicht wesentlich eingeschränkt, und optisch unerwünschte Makel sowohl auf Seiten der Hersteller als auch auf Seiten der Käufer sind vermieden.

Ein Ausführungsbeispiel der Erfindung wird anhand einer Zeichnung näher erläutert. Darin zeigen:
- Fig. 1: die Oberseite eines Handapparates für die Breitbandtelekommunikation,
- Fig. 2: einen Längsschnitt durch die Oberseite eines Handapparates für die Breitbandtelekommunikation

Gleiche Teile sind in beiden Figuren mit denselben Bezugszeichen versehen.

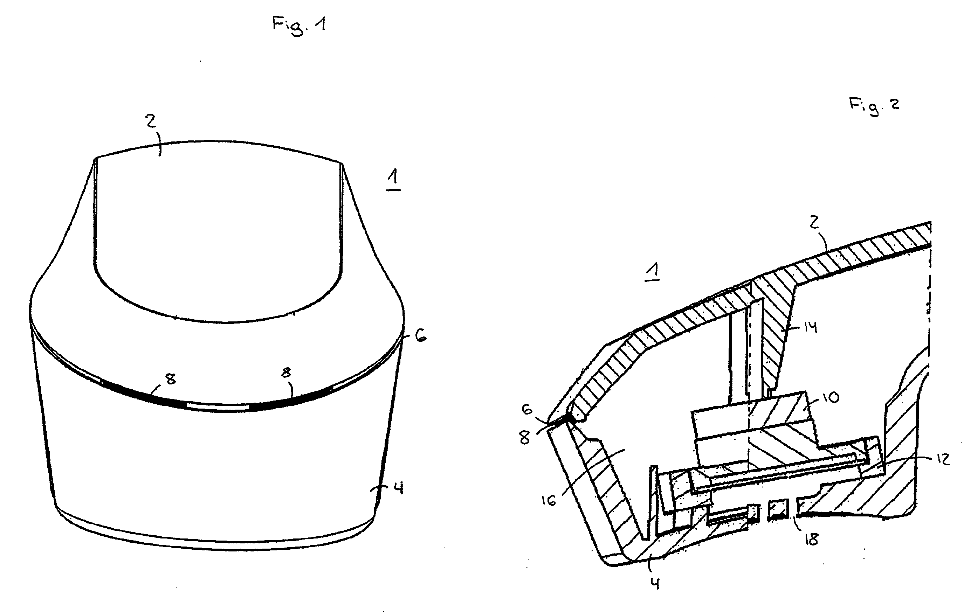

Der Handapparat 1 gemäß Fig. 1 ist Teil einer mit einer Mehrzahl von Endgeräten verbundenen Breitbandtelekommunikationsanlage und zur bedarfsweisen Übermittlung und Aufnahme von Sprachmitteilungen vorgesehen. Der Handapparat 1 ist direkt oder kabellos mit einem zugeordneten Endgerät verbunden. Wie in der Darstellung nach Fig. 1 erkennbar ist, ist das Gehäuse des Handapparates 1 aus einer Oberschale 2 und aus einer Unterschale 4 zusammengesetzt, die über eine Steckverbindung im Inneren des Handapparates 1 aneinander befestigt sind. Eine schmale Fügekante 6, die durch das Zusammenstecken der Ober- 2 und Unterschale 4 gebildet wird, verläuft an der Außenseite des Handapparates 1 einmal um diesen herum.

Die Unterschale 4 des Handapparates 1 beinhaltet in an sich üblicher Bauweise unter anderem Austrittsöffnungen für ein im Inneren des Handapparates 1 angeordnetes Mikrophon und eine Lautsprechereinheit, die räumlich voneinander getrennt angeordnet sind. In räumlicher Nähe des Lautsprechers ist im Inneren des Handapparates ein Hohlkörper angeordnet, der als Resonanzvolumen für die ausgesendeten Schallwellen dient. Durch dieses Resonanzvolumen werden die austretenden Schallwellen verstärkt und der Klang der Sprachmitteilung verbessert. Da durch das baulich beschränkte Volumen bevorzugt die hohen Frequenzen der Schallwellen verstärkt werden, für eine hohe Klangqualität und wirklichkeitstreue Wiedergabe bei der Übertragung der Sprachmitteilungen aber auch die tieferen Frequenzen eine Rolle spielen, sind am Handapparat eine Anzahl von Koppelschlitzen 8 angeordnet. Diese koppeln das äußere Freifeld an das Resonanzvolumen im Inneren des Handapparates 1 und ermöglichen so die Verstärkung der unteren Frequenzen und einen besonders guten Klang der Sprachmitteilung. Koppelschlitze 8 sind in üblicher Bauart jedoch an der Rückseite des Handapparates 1 angebracht und bergen daher ein Risiko in der Abhörsicherheit, da Schallwellen unerwünscht durch die Koppelschlitze 8 über die Rückseite des Handapparates 1 in das äußere Freifeld gelangen können.

Demgegenüber ist der Handapparat gem. Fig. 1 aber gerade gezielt dafür ausgelegt, dass trotz einer ausreichend hohen akustischen Ankopplung des Resonanzvolumens an den Außenraum derartiger Schallleckagen besonders gering gehalten sind. Dazu sind beim Handapparat 1 gem. Fig. 1 die Koppelschlitze 8 gezielt in der Fügekante 6 des Gehäuses angeordnet. Dadurch wird die unerwünschte Aussendung der Schallwellen über die Rückseite des Handapparates 1 erschwert. Weiterhin sind die Koppelschlitze 8 durch die Anordnung in der Fügekante 6 optisch versteckt und geben damit den Entwicklern eine besonders hohe designerische Freiheit. Die in der Fig. 1 dargestellten Koppelschlitze 8 sind symmetrisch bezüglich der Längsachse, also der Achse, die von der Mitte der Unterseite zur Mitte der Oberseite durch den geometrischen Mittelpunkt des Handapparates 1 verläuft, angeordnet. Dadurch ist die Flexibilität in der Nutzung solcher Handapparate 1 erhöht.

Die Koppelschlitze 8 sind in der Breite durch die Breite der Fügekante begrenzt, können aber in der Länge für eine optimale Ankopplung des akustischen Freifeldes angepasst werden. Bei einer durchschnittlichen Fügekante von etwa 2 mm ergibt sich daher eine bevorzugte Länge der Koppelschlitze von ca. 12 mm. Hierdurch kann eine Verstärkung der Frequenzen bis 100 Hz hinab erreicht werden.

Ein Längsschnitt durch die Oberseite des Handapparates 1 für die Breitbandtelekommunikation ist in Fig. 2 dargestellt. In der Oberseite des Handapparates ist eine Lautsprechereinheit 10 zur Wiedergabe eintreffender akustischer Signale in einer Lautsprecherfassung 12 platziert. Die Lautsprechereinheit 10 wird dabei durch das Zusammenstecken der Oberschale 2 und der Unterschale 4 des Handapparates 1. mittels eines an der aus der Oberschale 2 angeformten und in den Innenraum des Handapparates gerichteten Haltesteges 14 in die Lautsprecherfassung gedrückt und in ihr gehalten. Die beim Zusammenstecken der Ober- 2 und Unterschale 4 gebildete Fügekante 6 umfasst einen Koppelschlitz 8, der ein durch die Ober- 2 und Unterschale 4 begrenztes Rückraumvolumen 16 mit dem Außenraum verbindet.

Das Rückraumvolumen 16 dient der Lautsprechereinheit 10 im Betrieb des Handapparates 1 als Resonanzvolumen zur Verstärkung der durch die Austrittsöffnungen 18 ausgestrahlten Schallwellen. Durch die gezielte Anordnung der Koppelschlitze 8 in der Fügekante 6 wird das akustische Freifeld an das Rückraumvolumen angekoppelt und das Resonanzvolumen hierdurch vergrößert. Durch das Ankoppeln des Außenraumes an das Rückraumvolumen können damit auch tiefere Frequenzen verstärkt werden und ein besonders guter Klang der Sprachmitteilung erreicht werden, welcher durch eine alleinige Nutzung des Rückraumvolumens als Resonanzvolumen nicht möglich wäre.

### Bezugszeichenliste

- 1: Handapparat
- 2: Oberschale
- 4: Unterschale
- 6: Fügekante
- 8: Koppelschlitz
- 10: Lautsprechereinheit
- 12: Lautsprecherfassung
- 14: Haltesteg
- 16: Rückraumvolumen
- 18: Austrittsöffnungen

## Patentansprüche

1. Handapparat (1) für eine Breitbandtelekommunikationsanlage, dessen Gehäuse unter Bildung einer Fügekante (6) aus einer Ober- (2) und einer Unterschale (4) zusammengesetzt ist, wobei die Fügekante (6) mit einer Anzahl von Koppelschlitzen (8) versehen ist.

2. Handapparat (1) nach Anspruch 1, bei dem die Koppelschlitze (8) an der Oberseite des Handapparates (1) angebracht sind.

3. Handapparat (1) nach Anspruch 1 oder 2, bei dem die Länge der Koppelschlitze (8) derart gewählt ist, dass diese eine für einen Einsatzzweck ausreichende Durchtrittsfläche aufweisen.

4. Handapparat (1) nach einem der Ansprüche 1 bis 3, bei dem die Koppelschlitze (8) symmetrisch bezüglich einer Symmetrieachse des Handapparates (1) angeordnet sind.
